# EUROPÄISCHE PATENTSCHRIFT

(11) **EP 1 868 763 B1**
(45) Veröffentlichungstag und Bekanntmachung des Hinweises auf die Patenterteilung: **16.09.2009**
(21) Anmeldenummer: 06705903.0
(22) Anmeldetag: 04.02.2006
(51) Int. Cl.: B23K 20/02, F01D 5/00, F01D 5/34, B23P 6/00, B23K 101/00

(54) **VERFAHREN ZUR HERSTELLUNG UND/ODER REPARATUR EINES INTEGRAL BESCHAUFELTEN ROTORS DURCH INDUKTIVES DIFFUSIONSCHWEISSEN**
METHOD FOR PRODUCING AND/OR REPAIRING AN INTEGRALLY BLADED ROTOR BY INDUCTIVE DIFFUSION WELDING
PROCEDE POUR PRODUIRE ET/OU REPARER UN ROTOR A AUBAGE INTEGRE PAR SOUDAGE PAR DIFFUSION PAR INDUCTION

(30) Priorität: 10.02.2005 DE 102005006047
(43) Veröffentlichungstag der Anmeldung: 26.12.2007
(73) Patentinhaber: MTU Aero Engines GmbH, 80995 München (DE)
(72) Erfinder: BAYER, Erwin, 85221 Dachau (DE); KNOTT, Ulrich, 80997 München (DE); RICHTER, Karl-Hermann, 85229 Markt Indersdorf (DE)
(86) Internationale Anmeldenummer: PCT/DE2006/000174
(87) Internationale Veröffentlichungsnummer: WO 2006/084439

(56) Entgegenhaltungen:
- EP-A- 0 376 874
- EP-A- 0 418 606
- WO-A-20/05024185
- US-A- 4 529 452
- US-A- 4 640 454
- US-A- 4 883 216
- US-A- 5 099 573
- US-A- 5 511 949
- US-B1- 6 438 838
- PATENT ABSTRACTS OF JAPAN Bd. 2000, Nr. 21, 3. August 2001 (2001-08-03) -& JP 2001 105158 A (CENTRAL JAPAN RAILWAY CO), 17. April 2001 (2001-04-17)

## Beschreibung

Die Erfindung betrifft ein Verfahren zur Herstellung und/oder Reparatur eines integral beschaufelten Rotors, insbesondere eines integral beschaufelten Gasturbinenrotors gemäß dem Oberbegriff des Anspruchs 1 (siehe, z.B., US 4 529 452).

Gasturbinenrotoren werden zunehmend als integral beschaufelte Rotoren ausgeführt. Integral beschaufelte Rotoren werden auch als Blisk (bladed disk) oder Bling (bladed ring) bezeichnet, und zwar abhängig davon, ob ein scheibenförmiger Rotorgrundkörper oder ein ringförmiger Rotorgrundkörper vorliegt.

Bei der Herstellung von integral beschaufelten Rotoren kommt nach dem Stand der Technik das sogenannten lineare Reibschweißen zum Einsatz, um die Laufschaufeln an einen Rotorgrundkörper zu fügen. Beim linearen Reibschweißen wird auf die Fügeflächen ein Stauchdruck in einer Größenordnung zwischen 50 N/mm² und 75 N/mm² ausgeübt. Aufgrund dieser hohen Stauchkräfte ist ein Spannen der Laufschaufel in einem speziellen Spannbund erforderlich. Dies ist aufwendig und teuer. Des weiteren ist nach dem linearen Reibschweißen häufig eine aufwendige Nacharbeitung der Fügeflächen notwendig. Mit dem linearen Reibschweißen sind demnach bei der Herstellung von integral beschaufelten Rotoren eine Vielzahl von Nachteilen verbunden.

Laufschaufeln eines integral beschaufelten Rotors können während des Betriebs beschädigt werden, so dass nach einiger Zeit ein Reparieren eines integral beschaufelten Rotors durch Austauschen einer beschädigten Laufschaufel durch eine Ersatzlaufschaufel notwendig wird. Beim Reparieren von integral beschaufelten Rotoren kommt nach dem Stand der Technik das induktive Hochfrequenzpressschweißen zum Einsatz, wobei beim induktiven Hochfrequenzpressschweißen ein Stauchdruck in der Größenordnung von 25 N/mm² bis 50 N/mm² auf die Fügeflächen ausgeübt wird. Wie beim linearen Reibschweißen besteht auch beim induktiven Hochfrequenzpressschweißen der Nachteil, dass aufgrund der großen Stauchdrücke ein spezielles Spannen der Laufschaufeln erforderlich ist. Weiterhin ist auch nach dem Fügen durch induktives Hochfrequenzpressschweißen an den Fügeflächen in der Regel eine aufwendige Nachbearbeitung erforderlich.

Ein weiterer Nachteil des induktiven Hochfrequenzpressschweißens liegt darin, dass beim induktivem Hochfrequenzpressschweißen Fügevorgänge zwischen den miteinander zu verbindenden Bauteilen in der festen Phase sowie schmelzflüssigen Phase der Werkstoffe der miteinander zu verbindenden Bauteile durchgeführt werden, wodurch das Gefüge im Fügebereich beeinträchtigt werden kann. Demnach ist auch das induktive Hochfrequenzpressschweißen mit zahlreichen Nachteilen verbunden.

Hiervon ausgehend liegt der vorliegenden Erfindung das Problem zu Grunde, ein neuartiges Verfahren zur Herstellung und/oder Reparatur eines integral beschaufelten Rotors zu schaffen.

Dieses Problem wird durch ein Verfahren gemäß Patentanspruch 1 gelöst. Erfindungsgemäß wird das Fügen durch Diffusionsschweißen durchgeführt.

Im Sinne der hier vorliegenden Erfindung wird vorgeschlagen, das Herstellen sowie Reparieren von integral beschaufelten Rotoren mit Hilfe des Diffusionsschweißens durchzuführen. Die integral beschaufelten Rotoren können beispielsweise als Blisk oder als Bling gestaltet sein. Beim Diffusionsschweißen wirkt auf die Fügeflächen ein deutlich geringerer Stauchdruck in der Größenordnung von 1 N/mm², so dass auf nach dem Stand der Technik beim linearen Reibschweißen sowie induktiven Hochfrequenzpressschweißen erforderliche Spannbunde verzichtet werden kann und demnach ein Fixieren der Laufschaufeln unmittelbar am Schaufelblattprofil derselben möglich ist. Des weiteren reduziert sich infolge des geringen Stauchdrucks die Gefahr von mechanisch unkontrollierten Verformungen, so dass nach dem Fügen weniger Nachbearbeitungen an den Fügeflächen vorgenommen werden müssen. Weiterhin wird das Diffusionsschweißen ausschließlich in der festen Phase der Werkstoffe der miteinander zu verbindenden Bauteile durchgeführt, so dass das Gefüge im Fügebereich nicht negativ beeinträchtigt wird. Die Gefahr von lokalen Bindefehlern bzw. Fügefehlern wird demnach minimiert.

Gemäß der Erfindung werden zur Herstellung eines integral beschaufelten Rotors Laufschaufeln an den Rotorgrundkörper, an höckerartige Vorsprünge desselben, gleichzeitig durch Diffusionsschweißen im Vakuumofen gefügt.

Bevorzugte Weiterbildungen der Erfindung ergeben sich aus den Unteransprüchen und der nachfolgenden Beschreibung. Beispiel, das nicht Gegenstand der Erfindung ist, und Ausführungsbeispiel der Erfindung werden, ohne hierauf beschränkt zu sein, an Hand der Zeichnung näher erläutert. Dabei zeigt:
- Fig. 1: einen Ausschnitt aus einem integral beschaufelten Rotor bei der Reparatur desselben im Sinne eines Verfahrens, das nicht Gegenstand der Erfindung ist, in schematisierter, perspektivischer Seitenansicht zusammen mit einer geschnittenen Einspannvorrichtung für eine zu fügende Laufschaufel; und
- Fig. 2: einen integral beschaufelten Rotor bei der Herstellung desselben im Sinne des erfindungsgemäßen Verfahrens in schematisierter Vorderansicht zusammen mit einer ringförmigen Spannvorrichtung.

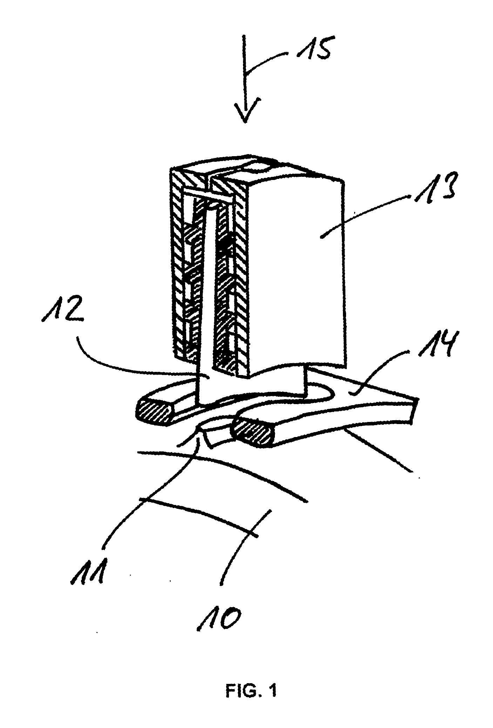

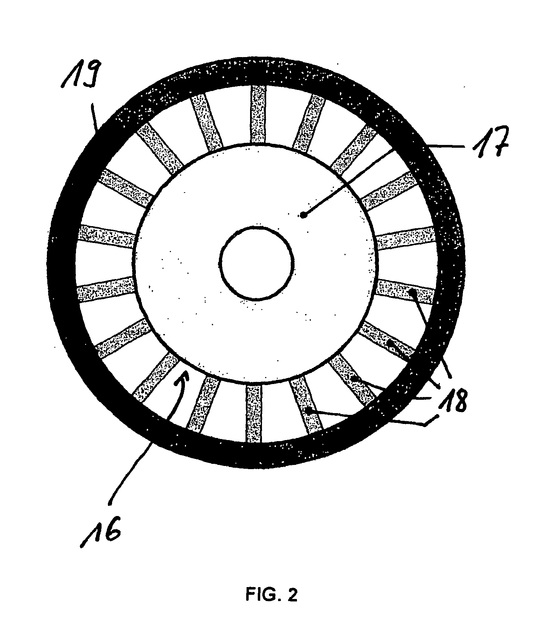

Nachfolgend wird die Erfindung unter Bezugnahme auf Fig. 1 und 2 in größerem Detail beschrieben.

Unter Bezugnahme auf Fig. 1 wird ein Verfahren, das nicht Gegenstand der Erfindung ist, im Zusammenhang mit der Reparatur eines integral beschaufelten Rotors 10 beschrieben, wobei in der Darstellung der Fig. 1 vom integral beschaufelten Rotor 10 bereits eine auszutauschende Laufschaufel unter Bildung eines höckerartigen Schaufelstumpfes 11 entfernt wurde. An den Schaufelstumpf. 11 des integral beschaufelten Rotors 10 wird eine Ersatzlaufschaufel 12 durch Diffusionsschweißen befestigt, wobei hierzu die Ersatzlaufschaufel 12 unmittelbar im Bereich ihres Schaufelblatts in einer Einspannvorrichtung 13 gespannt ist.

Der integral beschaufelte Rotor kann beispielsweise als Blisk oder als Bling gestaltet sein.

Bei der Reparatur eines integral beschaufelten Rotors 10 wird das Diffusionsschweißen als induktives Diffusionsschweißen durchgeführt. Hierzu wird eine Induktionsspule 14 im Bereich der auszubildenden Fügefläche positioniert, wobei über die Induktionsspule 14 eine Erhitzung des zu reparierenden, integral beschaufelten Rotors 10 ausschließlich im Fügebereich zwischen dem höckerartigen Schaufelstumpf 11 und dem angrenzenden Bereich der Ersatzlaufschaufel 12 erfolgt. Über die Induktionsspule 14 wird der integral beschaufelte Rotor 10 sowie die zu fügende Ersatzlaufschaufel 12 ausschließlich in dem Fügebereich erhitzt. Bei Titanlegierungen liegt die zum induktiven Diffusionsschweißen erforderliche Temperatur in einer Größenordnung von 900 °C und 950 °C, wobei die Temperatur zum Beispiel durch ein Pyrometer oder Thermoelement gemessen und dadurch auf einen konstanten Wert geregelt werden kann.

Beim induktiven Diffusionsschweißen wird in Richtung des Pfeils 15 eine Stauchkraft auf die zu fügenden Bauteile, nämlich auf die Ersatzlaufschaufel 12, ausgeübt, und zwar derart, dass sich im Bereich der Fügefläche zwischen dem höckerartigen Schaufelstumpf 11 und der Ersatzlaufschaufel 12 ein Stauchdruck in der Größenordnung zwischen 0,5 N/mm² bis 5 N/mm², vorzugsweise von in etwa 1 N/mm², einstellt. Zur Bereitstellung eines derart geringen Stauchdrucks sind geringe Stauchkräfte ausreichend, so dass, wie Fig. 1 zeigt, die Ersatzlaufschaufel 12 unmittelbar im Bereich ihres Schaufelblatts in der Einspannvorrichtung 13 eingespannt werden kann.

Beim induktiven Diffusionsschweißen liegt die Prozesszeit zum Fügen der miteinander zu verbindenden Bauteile in einer Größenordnung zwischen 1 bis 2 Stunden. Aufgrund dieser relativ langen Prozesszeit kann eine homogene Erwärmung im Fügebereich zwischen dem höckerartigen Schaufelstumpf 11 und der Ersatzlaufschaufel 12 realisiert werden, so dass die Gefahr von lokalen Fügefehlern minimiert wird. Weiterhin wird das induktive Diffusionsschweißen ausschließlich in der festen Phase der Werkstoffe der miteinander zu verbindenden Bauteile durchgeführt, was ebenfalls für das Werkstoffgefüge im Fügebereich von Vorteil ist.

An dieser Stelle sei darauf hingewiesen, dass das induktive Diffusionsschweißen zum Fügen der Ersatzlaufschaufel 12 an den integral beschaufelten Rotor 10 unter Vakuum oder Schutzgasatmosphäre durchgeführt wird. Als Schutzgas findet vorzugsweise Argon Verwendung.

Mit dem unter Bezugnahme auf Fig. 1 beschriebenen Verfahren zur Reparatur eines integral beschaufelten Rotors 10 werden gemäß der Erfindung gleichzeitig mehrere Laufschaufeln an einen Rotorgrundkörper im Bereich von Schaufelstümpfen gefügt. Weiterhin kann das unter Bezugnahme auf Fig. 1 beschriebene Verfahren auch gemäß der Erfindung zur Neuteilfertigung und demnach zur Herstellung eines integral beschaufelten Rotors Verwendung finden.

Unter Bezugnahme auf Fig. 2 wird ein erfindungsgemäßes Verfahren bei der Neuteilfertigung, also bei der Herstellung eines integral beschaufelten Rotors 16 beschrieben. Gemäß Fig. 2 umfasst der integral beschaufelte Rotor 16 einen scheibenförmigen Rotorgrundkörper 17, wobei an den scheibenförmigen Rotorgrundkörper 17 mehrere Laufschaufeln 18 durch Diffusionsschweißen gefügt werden. Gemäß der Erfindung erfolgt das Fügen der Laufschaufeln 18 am Rotorgrundkörper 17 wiederum im Bereich höckerartiger Vorsprünge, die jedoch in Fig. 2 nicht dargestellt sind.

Im Ausführungsbeispiel der Fig. 2 erfolgt das Fügen der Laufschaufeln 18 an den Rotorgrundkörper 17 durch Diffusionsschweißen in einem VakuumOfen, wobei alle Laufschaufeln 18 gleichzeitig am Rotorgrundkörper 17 durch Diffusionsschweißen befestigt werden. Hierzu werden alle Laufschaufeln 18 in entsprechenden Einspannvorrichtungen (analog der Einspannvorrichtung 13 des Beispiels der Fig. 1) im Bereich ihrer Schaufelblätter eingespannt, die an einer ringförmigen Spannvorrichtung 19 gelagert sind. Die ringförmigen Spannvorrichtung 19 verbindet demnach alle Einspannvorrichtungen für die Schaufelblätter der Laufschaufeln 18 miteinander. Die ringförmige Spannvorrichtung 19 ist dabei aus einem Werkstoff gefertigt, der einen geringeren thermischen Ausdehnungskoeffizienten aufweist als der Werkstoff der an den Rotorgrundkörper 17 zu fügenden Laufschaufeln 18. Wird die Anordnung der Fig. 2 insgesamt in einem Vakuum-Ofen auf die zum Diffusionsschweißen erforderliche Prozesstemperatur erhitzt, so dehnen sich Rotorgrundkörper 17, Laufschaufeln 18 sowie die ringförmige Spannvorrichtung 19 aus, wobei die Ausdehnung der Spannvorrichtung 19 geringer ist als die Ausdehnung der Laufschaufeln 18. Hierdurch wirkt dann auf die Laufschaufeln 18 eine Stauchkraft und damit ein Stauchdruck im Bereich der Fügefläche zwischen den Laufschaufeln 18 und dem Rotorgrundkörper 17. Dieser Stauchdruck im Bereich der Fügeflächen liegt wiederum vorzugsweise in der Größenordnung von in etwa 1 N/mm² und wird alleine durch die unterschiedlichen Ausdehnungskoeffizienten der Werkstoffe von Laufschaufeln 18 und ringförmiger Spannvorrichtung 19 bereitgestellt. Hierdurch kann auf besonders einfache Art und Weise die zum Diffusionsschweißen erforderliche Stauchkraft bereitgestellt werden.

## Patentansprüche

1. verfahren zur Herstellung und/oder Reparatur eines integral beschaufelten Rotors, insbesondere eines integral beschaufelten Gasturbinenrotors, wobei zur Herstellung und/oder Reparatur mindestens eine Laufschaufel (18) an einen Rotorgrundkörper (17) gefügt wird,
**dadurch gekennzeichnet,**
**dass** das Fügen durch Diffusionsschweißen durchgeführt wird, wobei zur Herstellung des integral beschaufelten Rotors Laufschaufeln (18) durch induktives Diffusionsschweißen an den Rotorgrundkörper (19), und an höckerartige Vorsprünge (11) desselben, gefügt werden, und wobei gleichzeitig mehrere Laufschaufeln (18) an den Rotorgrundkörper (17) durch induktives Diffusionsschweißen gefügt werden.

2. Verfahren nach Anspruch 1,
**dadurch gekennzeichnet,**
**dass** das Diffusionsschweißen unter Vakuum oder Schutzgasatmosphäre durchgeführt wird.

3. Verfahren nach Anspruch einem der vorangehenden Ansprüche,
**dadurch gekennzeichnet,**
**dass** hierbei der Rotorgrundkörper (17) und die Laufschaufeln (18) ausschließlich im Fügebereich erhitzt werden.

4. Verfahren nach einem der Ansprüche 1 bis 3,
**dadurch gekennzeichnet,**
**dass** beim Diffusionsschweißen zum Fügen ein Stauchdruck zwischen 0,5 N/mm² und 5 N/mm², vorzugsweise von in etwa 1 N/mm², ausgeübt wird.

## Claims

1. Method for producing and/or repairing an integrally bladed rotor, in particular an integrally bladed gas turbine rotor, wherein at least one rotor blade (18) is joined to a rotor base body (17) for the production and/or repair,
**characterised in that**
the joining is carried out by diffusion welding, wherein in order to produce the integrally bladed rotor, rotor blades (18) are joined to the rotor base body (17) and to protuberance-like projections (11) of the same by means of inductive diffusion welding, and wherein a plurality of rotor blades (18) are joined to the rotor base body (17) by means of inductive diffusion welding at the same time.

2. Method according to claim 1,
**characterised in that**
the diffusion welding is carried out under vacuum or an inert-gas atmosphere.

3. Method according to one of the preceding claims,
**characterised in that**
in this connection the rotor base body (17) and the rotor blades (18) are heated exclusively in the joining region.

4. Method according to one of claims 1 to 3,
**characterised in that**
during the diffusion welding for joining purposes an upsetting pressure of between 0.5 N/mm² and 5 N/mm², preferably of approximately 1 N/mm², is exerted.

## Revendications

1. Procédé pour produire et/ou réparer un rotor à aubage intégré, en particulier un rotor de turbine à gaz à aubage intégré, dans lequel au moins une aube mobile (18) est assemblée à un corps de base de rotor (17) pour la production et/ou la réparation,
**caractérisé en ce que**
l'assemblage est réalisé par soudage par diffusion, des aubes mobiles (18) étant assemblées par soudage par diffusion par induction au corps de base de rotor (17) et à ses saillies (11) en forme de bossage pour la production du rotor à aubage intégré, et plusieurs aubes mobiles (18) étant assemblées en même temps au corps de base de rotor (17) par soudage par diffusion par induction.

2. Procédé selon la revendication 1,
**caractérisé en ce que**
le soudage par diffusion est réalisé sous vide ou sous atmosphère protectrice.

3. Procédé selon l'une quelconque des revendications précédentes,
**caractérisé en ce que**
le corps de base de rotor (17) et les aubes mobiles (18) sont chauffées exclusivement dans la zone d'assemblage.

4. Procédé selon l'une des revendications 1 à 3,
**caractérisé en ce que**
lors du soudage par diffusion, une pression de compression comprise entre 0,5 N/mm² et 5 N/mm², de préférence de 1 N/mm² environ, est exercée pour l'assemblage.
